# EUROPÄISCHE PATENTSCHRIFT

(11) **EP 3 094 528 B1**
(45) Veröffentlichungstag und Bekanntmachung des Hinweises auf die Patenterteilung: **01.11.2017**
(21) Anmeldenummer: 14821116.2
(22) Anmeldetag: 16.12.2014
(51) Int. Cl.: B60T 8/92, B60T 7/12, B60T 8/48

(54) **BREMSANLAGE FÜR FAHRZEUGE**
BRAKE SYSTEM FOR VEHICLES
SYSTÈME DE FREINAGE POUR VÉHICULES

(30) Priorität: 16.01.2014 DE 102014200662; 09.10.2014 DE 102014220441
(43) Veröffentlichungstag der Anmeldung: 23.11.2016
(73) Patentinhaber: Continental Teves AG&Co. Ohg, 60488 Frankfurt (DE)
(72) Erfinder: LINHOFF, Paul, 61267 Neu-Anspach (DE); ECKERT, Alfred, 55129 Mainz-Hechtsheim (DE)
(86) Internationale Anmeldenummer: PCT/EP2014/077872
(87) Internationale Veröffentlichungsnummer: WO 2015/106905

(56) Entgegenhaltungen:
- WO-A1-2012/143312
- DE-A1- 19 611 360
- DE-A1- 19 843 221
- DE-A1-102010 003 237

## Beschreibung

Die Erfindung betrifft eine Bremsanlage für Fahrzeuge gemäß dem Oberbegriff von Anspruch 1.

Bei Kraftfahrzeugen sind elektrohydraulische Bremssysteme weit verbreitet. Es sind Bremsanlagen bekannt, z.B. aus der DE 10 2010 062 387 A1, welche einen Hauptbremszylinder, einen dem Hauptbremszylinder vorgeschalteten Vakuumbremskraftverstärker und eine elektrohydraulische ABS/ESP-Bremsensteuervorrichtung umfassen, wobei die Bremsensteuervorrichtung Druckregelventile und eine elektrisch ansteuerbare Pumpe zum Einstellen radindividueller Bremsdrücke umfasst. Die vier Radbremsen sind an die radindividuellen Ausgangsdruckanschlüsse der Bremsensteuervorrichtung angeschlossen. Mittels der Pumpe ist ein aktiver, fremdangesteuerter Aufbau von Bremsdruck möglich, wodurch Bremsdruckregelfunktionen wie Antriebsschlupfregelung (ASR) und Fahrstabilitätsregelung (ESP) ermöglicht werden.

Es ist zu erwarten, dass zukünftig auch Fahrzeugbremssysteme zum Einsatz kommen werden, welche für automatisch fahrende Fahrzeuge geeignet sind. Diese Bremssysteme müssen grundsätzlich fremdansteuerbare Systeme sein. Dies bedeutet, dass eine Bremsanforderung über elektronische oder elektrische Steuersignale angefordert und vom System ohne Zutun des Fahrers umgesetzt werden kann. Hierbei muss aus Sicherheitsgründen eine ausreichend hohe Verfügbarkeit des Bremssystems bzw. der fremdansteuerbaren Bremsfunktion gewährleistet sein.

Bei der Bremsanlagen der DE 10 2010 062 387 A1 ist im Falle eines Ausfalls der Bremsensteuervorrichtung ein fremdangesteuerter (fahrerunabhängiger) Aufbau von Bremsdruck wie auch eine radindividuelle Bremsdruckregelung (z.B. Antiblockierregelung (ABS)) nicht mehr möglich. Eine solche Bremsanlage ist daher für hochautomatisiert oder autonom fahrende Kraftfahrzeuge weniger geeignet.

Aus der WO 2012/143312 A1 ist eine Bremsanlage bekannt, welche ein erstes elektrohydraulisches Modul mit einem Hauptbremszylinder und einer ersten elektrisch ansteuerbaren Druckquelle zum Bereitstellen bremskreisindividueller Bremskreisdrücke sowie ein dem ersten Modul nachgeschaltetes, zweites elektrohydraulisches Modul mit einer Druckregelventilanordnung zum Einstellen radindividueller Bremsdrücke und einer zweiten elektrisch ansteuerbaren Druckquelle umfasst.

In der DE 10 2010 003 237 A1 wird eine Bremsanlage beschrieben, welche zwei voneinander unabhängige, identisch aufgebaute Bremskreiseinrichtungen aufweist, wobei jede der Bremskreiseinrichtungen ein radindividuelles Einlass- und Auslassventil für jede der vier Radbremsen umfassen und wobei jede der vier Radbremsen mit einem Einlassventil der einen Bremskreiseinrichtung und einem Einlassventil der anderen Bremskreiseinrichtung verbunden ist.

Für das hochautomatische bzw. hochautomatisierte Fahren (HAF) ist ein Abschalten der Bremsanlage nach einem beliebigen Erstfehler nicht möglich. Es soll bei Ausfall eines, dem autonomen Fahren zugeordneten elektronischen Steuergerätes zumindest für einen vorgegebenen Zeitraum (z.B. einige Sekunden) eine funktionelle autonome Bremsfunktion wie auch Lenkfunktion noch dargestellt werden können, da nicht davon ausgegangen werden darf, dass der Fahrer unmittelbar nach einem Ausfall des Steuergerätes die Führung des Fahrzeugs übernehmen kann, sondern erst zur Wideraufnahme der Fahraufgabe aufgefordert werden und sich auf diese einstellen muss.

Es ist daher Aufgabe der vorliegenden Erfindung, eine Bremsanlage für Fahrzeuge bereitzustellen, mit der die Sicherheitsanforderungen des hochautomatisierten Fahrens oder des autonomen Fahrens erfüllt werden.

Diese Aufgabe wird erfindungsgemäß durch eine Bremsanlage gemäß Anspruch 1 gelöst.

Der Erfindung liegt der Gedanke zugrunde, dass der Bremskraftverstärker elektrisch ansteuerbar ausgeführt wird und eine zusätzliche (zweite) elektrohydraulische Bremsensteuervorrichtung vorgesehen ist, welche eine zweite Druckregelventilanordnung umfasst und in Reihe zwischen die erste Bremsensteuervorrichtung und die Radbremsen geschaltet ist.

Die Erfindung bietet den Vorteil, dass bei einem beliebigen Einfachfehler der Bremsanlage ein sicheres Abbremsen des Fahrzeuges in beliebigen Fahrsituationen, d.h. insbesondere mit radindividuellen Radbremsdrücken, weiterhin möglich ist, ohne dass die Unterstützung des Fahrers dafür notwendig wäre.

Die Erfindung bietet weiterhin den Vorteil, dass eine Bremsanlage bereitgestellt wird, die eine redundante radindividuelle Bremsregelfunktion, insbesondere eine ESP-Funktion (Fahrstabilitätsfunktion, ESP: Electronic Stability Program), gewährleistet.

Die erfindungsgemäße Bremsanlage bietet weiterhin den Vorteil, dass sie optional in einem Fahrzeug bzw. in einer an sich bekannten Bremsanlage ergänzt werden kann, um ein hochautomatisiertes Fahren oder autonomes Fahren zu ermöglichen.

Bevorzugt ist der Bremskraftverstärker ein Unterdruckbremskraftverstärker (Vakuumbremskraftverstäker).

Die elektrisch ansteuerbare Druckquelle der ersten elektrohydraulischen Bremsensteuervorrichtung ist bevorzugt als eine Hydraulikpumpe ausgebildet. Besonders bevorzugt wird die Hydraulikpumpe durch eine zweikreisige, von einem Elektromotor angetriebene Rückförderpumpe gebildet.

Eine Druckregelventilanordnung umfasst bevorzugt je Radbremse mindestens ein elektrisch betätigbares Ventil, um radindividuelle Bremsdrücke an den radindividuellen Ausgangsdruckanschlüssen einstellen zu können.

Bevorzugt umfasst die zweite Bremsensteuervorrichtung keine elektrisch ansteuerbare Druckquelle, da im Falle eines Ausfalls der elektrisch ansteuerbaren Druckquelle der ersten Bremsensteuervorrichtung ein fremdangesteuerter Druckaufbau mittels elektrischer Ansteuerung des Bremskraftverstärker möglich ist.

Der elektrisch ansteuerbare Bremskraftverstärker wird bevorzugt einen durch einen Hubmagneten betätigbarer aktiven Vakuumbremskraftverstärker (Booster) gebildet. Solche Vakuumbremskraftverstärker sind an sich bekannt.

Gemäß einer bevorzugten Ausführungsform der erfindungsgemäßen Bremsanlage ist die zweite Bremsensteuervorrichtung zur Ansteuerung des elektrisch betätigbaren Bremskraftverstärkers ausgeführt. Besonders bevorzugt sind Mittel vorgesehen, welche eine Ansteuerung des Bremskraftverstärkers durch die zweite Bremsensteuervorrichtung ermöglichen. Ganz besonders bevorzugt ist die elektronische Steuer- und Regeleinheit der zweiten Bremsensteuervorrichtung über elektrische Leitungen mit dem Bremskraftverstärker verbunden, um diesen ansteuern zu können. Vorteilhafterweise sind ein Vakuumsensor und der Hubmagnet des Vakuumbremskraftverstärkers mit der zweiten Bremsensteuervorrichtung verbunden.

Bevorzugt weist die erste Bremsensteuervorrichtung zumindest einen Eingangsdruckanschluss auf, an welchen der Hauptbremszylinder angeschlossen ist.

Die zweite Bremsensteuervorrichtung umfasst bevorzugt für jede Radbremse einen radindividuellen Eingangsdruckanschluss.

Bevorzugt ist jeder Ausgangsdruckanschluss der ersten Bremsensteuervorrichtung an einen Eingangsdruckanschluss der zweiten Bremsensteuervorrichtung angeschlossen, so dass, insbesondere bei einem Ausfall der zweite Bremsensteuervorrichtung, die radindividuellen Radbremsdrücke der ersten Bremsensteuervorrichtung durch die zweite Bremsensteuervorrichtung zu den Radbremsen weitergeleitet werden können.

Die zweite Bremsensteuervorrichtung umfasst bevorzugt für jede Radbremse einen radindividuellen Ausgangsdruckanschluss, welcher mit, insbesondere genau, einer Radbremse verbunden ist. Die Ausgangsdruckleitungen der zweiten Bremsensteuervorrichtung sind besonders bevorzugt direkt mit den Radbremsen verbunden.

Zur Einstellung oder Regelung der radindividuellen Radbremsdrücke mittels der zweiten Bremsensteuervorrichtung umfasst diese bevorzugt für jede Radbremse ein elektrisch betätigbares Einlassventil, ein elektrisch betätigbares Auslassventil und einen Niederdruckspeicher. Besonders bevorzugt ist das Einlassventil analog ansteuerbar oder analogisiert ausgeführt.

Zur Druckregelung ist bevorzugt ein Drucksensor zur Bestimmung des Druckes an einem Ausgangsdruckanschluss je Radbremskreis in der zweiten Bremsensteuervorrichtung vorgesehen.

Bevorzugt ist die erste Bremsensteuervorrichtung einteilig als ein Bremsensteuergerät mit einer elektronischen Steuer- und Regeleinheit und einer hydraulischen Steuer- und Regeleinheit ausgeführt.

Ebenso ist die zweite Bremsensteuervorrichtung bevorzugt einteilig als ein Bremsensteuergerät mit einer elektronischen Steuer- und Regeleinheit und einer hydraulischen Steuer- und Regeleinheit ausgeführt.

Gemäß einer bevorzugten Ausführungsform der erfindungsgemäßen Bremsanlage sind für jedes der mit einer Radbremse versehenen Räder zumindest zwei Einrichtungen zur Erfassung einer Raddrehzahl vorgesehen, wobei jeweils das Signal einer der Einrichtungen der ersten Bremsensteuervorrichtung und das Signal der andere Einrichtung der zweiten Bremsensteuervorrichtung zugeführt wird.

Gemäß einer anderen bevorzugten Ausführungsform der erfindungsgemäßen Bremsanlage ist für jedes der mit einer Radbremse versehenen Räder zumindest eine redundant ausgeführte Einrichtung zur Erfassung einer Raddrehzahl vorgesehen, wobei jeweils ein Signal der Einrichtung der ersten Bremsensteuervorrichtung und das andere Signal der zweiten Bremsensteuervorrichtung zugeführt wird.

Bei beiden Ausführungsformen stehen so jedem der Bremsensteuervorrichtungen die Raddrehzahlinformationen aller Räder unabhängig voneinander zur Bremsdruckregelung zur Verfügung.

Zur redundanten Ausführung von Fahrdynamikregelfunktionen sind bevorzugt zumindest zwei Gierratensensoren oder zwei Sensorcluster mit je zumindest einem Gierratensensor vorgesehen, wobei der eine Gierratensensor / Sensorcluster der ersten Bremsensteuervorrichtung und der andere Gierratensensor / Sensorcluster der zweiten Bremsensteuervorrichtung zugeordnet ist.

Alternativ ist es bevorzugt, dass ein doppelt ausgeführter Gierratensensor oder Sensorcluster vorgesehen ist, dessen beiden unabhängigen Signale der ersten und der zweiten Bremsensteuervorrichtung bereitgestellt werden.

Bevorzugt übernimmt bei Ausfall der ersten Bremsensteuervorrichtung die zweite Bremsensteuervorrichtung, (möglichst ohne Verzögerung) die Bremsfunktionen. Besonders bevorzugt übernimmt die zweite Bremsensteuervorrichtung die Druckaufbaufunktion mittels des elektrisch betätigbaren Bremskraftverstärkers oder die Fahrdynamikregelfunktion / Stabilitätsregelfunktion mittels des elektrisch betätigbaren Bremskraftverstärkers und der zweiten Druckregelventilanordnung.

Neben einfachen Bremsfunktionen führt die Bremsanlage bevorzugt Fahrdynamikregelfunktionen (elektronisches Stabilitätsprogramm (ESP), Electronic Stability Control (ESC)) und/oder sonstige Bremsaktivierungen (wie Active Cruise Control (ACC)) redundant fremdangesteuert durch.

Bevorzugt umfasst die Bremsanlage zumindest zwei Bremsensteuervorrichtung, eine erste Bremsensteuervorrichtung, welche besonders bevorzugt gleich oder ähnlich einer konventionellen oder an sich bekannten ABS/ESP-Bremsensteuervorrichtung ist, und eine zweite Bremsensteuervorrichtung, welche in einer hydraulischen Reihenschaltung der ersten Bremsensteuervorrichtung nachgeschaltet ist und zur Ansteuerung des elektrisch betätigbaren Bremskraftverstärkers ausgeführt ist.

Bevorzugt sind die Bremsensteuervorrichtungen so ausgelegt, dass im Normalbetrieb (kein Ausfall einer Bremsensteuervorrichtung) sich eine Bremsensteuervorrichtung (vorteilhafterweise die zweite Bremsensteuervorrichtung) in einem passiven Modus (z.B. nur Selbstüberwachung und Test) befindet und die andere Bremsensteuervorrichtung (vorteilhafterweise die erste Bremsensteuervorrichtung) die übliche Regelfunktionen ausführt.

Bevorzugt umfasst die zweite Bremsensteuervorrichtung eine Druckregelventilanordnung und keine Druckquelle, und es sind Mittel zur Ansteuerung des elektrisch ansteuerbaren Bremskraftverstärkers mittels der elektronischen Steuer- und Regeleinheit der zweiten Bremsensteuervorrichtung vorgesehen.

Die hydraulische und elektrische Verschaltung der Bremsanlage ist bevorzugt derart ausgeführt, dass die erste Bremsensteuervorrichtung unabhängig von der zweiten Bremsensteuervorrichtung diverse oder alle Bremsregelfunktionen durchführen kann und dass auch die zweite Bremsensteuervorrichtung mittels Ansteuerung des Bremskraftverstärkers und der zweiten Druckregelventilanordnung diverse oder sogar alle Bremsregelfunktionen, und besonders bevorzugt auch die Bremsung von einzelnen oder mehreren Rädern zu Spurhalte- oder Lenkbeeinflussungen, durchführen kann.

Bevorzugt werden die erste Bremsensteuervorrichtung und die zweite Bremsensteuervorrichtung aus mehr als einer elektrischen Energiequelle versorgt. Besonders bevorzugt haben die erste Bremsensteuervorrichtung und die zweite Bremsensteuervorrichtung zumindest eine im Wesentlichen unabhängige elektrische Energieversorgung, insbesondere Spannungsversorgung.

Weitere bevorzugte Ausführungsformen der Erfindung ergeben sich aus den Unteransprüchen und der nachfolgenden Beschreibung anhand von Figuren.

Es zeigen schematisch:
- Fig. 1: ein Ausführungsbeispiel einer erfindungsgemäßen Bremsanlage, und
- Fig. 2: ein Ausführungsbeispiel einer zweiten Bremsensteuervorrichtung.

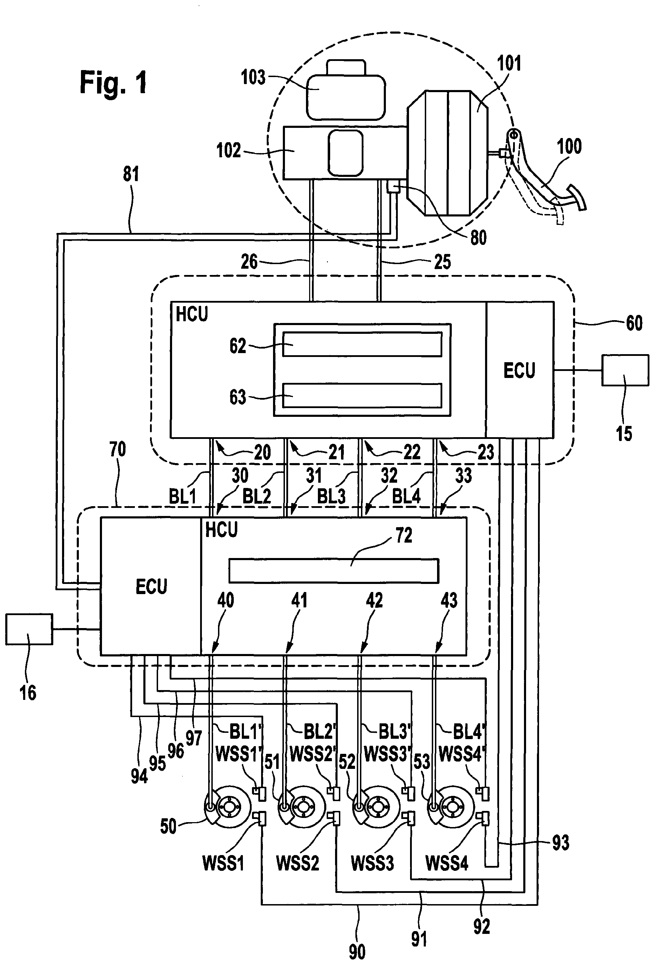

Fig. 1 zeigt schematisch ein Ausführungsbeispiel einer erfindungsgemäßen Bremsanlage. Die beispielsgemäße Bremsanlage umfasst ein Bremspedal 100, einen Hauptbremszylinder (Tandemhauptbremszylinder) 102 mit zugeordnetem Druckmittelvorratsbehälter 103, einen dem Hauptbremszylinder vorgeschalteten, elektrisch ansteuerbaren (aktiven) Vakuumbremskraftverstärker 101, eine erste elektrohydraulische Bremsensteuervorrichtung 60, eine zweite elektrohydraulische Bremsensteuervorrichtung 70 und vier hydraulische Radbremsen 50, 51, 52, 53.

Die beiden Druckräume des Tandemhauptbremszylinders 102 sind über Bremskreisleitungen 25, 26 mit den zwei Eingangsdruckanschlüssen der Bremsensteuervorrichtung 60 verbunden. Die erste Bremsensteuervorrichtung 60 besitzt radindividuelle Ausgangsdruckanschlüsse 20, 21, 22, 23 und die zweite Bremsensteuervorrichtung 70 besitzt radindividuelle Eingangsdruckanschlüsse 30, 31, 32, 33. Jeder Ausgangsdruckanschlüsse 20, 21, 22, 23 ist mit genau einem der Eingangsdruckanschlüsse 30, 31, 32, 33 über eine Bremsleitung BL1, BL2, BL3, BL4 verbunden. Die zweite Bremsensteuervorrichtung 70 besitzt radindividuelle Ausgangsdruckanschlüsse 40, 41, 42, 43, welche über Bremsleitungen BL1', BL2', BL3', BL4' an je eine der Radbremsen 50, 51, 52, 53 angeschlossen sind. Die zweite elektrohydraulische Bremsensteuervorrichtung 70 ist somit hydraulisch in Reihe zwischen die erste Bremsensteuervorrichtung 60 und die Radbremsen 50, 51, 52, 53 geschaltet.

Bremsensteuervorrichtung 60 ist beispielsgemäß einteilig als ein Bremsensteuergerät (HECU) mit einer elektronischen Steuer- und Regeleinheit (ECU) und einer hydraulischen Steuer- und Regeleinheit (HCU) ausgeführt.

Die hydraulische Einheit der Bremsensteuervorrichtung 60 umfasst beispielsgemäß vier Radbremskreise mit den zugeordneten vier Ausgangsdruckanschlüssen 20, 21, 22, 23, die in zwei Bremskreisen angeordnet sind, und eine Druckregelventilanordnung 62 zum Einstellen radindividueller Radbremsdrücke. Vorteilhafterweise ist in der hydraulischen Einheit eine elektrisch ansteuerbare Druckquelle 63, z.B. eine zweikreisige Pumpe, vorgesehen, um z.B. Druckmittel rückfördern oder Bremsdruck aktiv aufbauen zu können.

Vorteilhafterweise ist die Bremsensteuervorrichtung 60 als eine an sich bekannt ABS/ESP-Bremsregeleinheit ausgeführt, die eine Druckregelventilanordnung 62 mit zwölf Ventilen zur Regelung der Radbremsdrücke, einen Niederdruckspeicher je Bremskreis und eine zweikreisige Rückförderpumpe umfasst. Z.B. umfasst die hydraulischen Steuer- und Regeleinheit ein Einlass- und ein Auslassventil je Radbremse sowie ein Trenn- und ein Umschaltventil und einen Niederdruckspeicher je Bremskreis.

Bremsensteuervorrichtung 70 ist beispielsgemäß einteilig als ein Bremsensteuergerät (HECU) mit einer elektronischen Steuer- und Regeleinheit (ECU) und einer hydraulischen Steuer- und Regeleinheit (HCU) ausgeführt.

Der aktive Vakuumbremskraftverstärker 101 umfasst einen Vakuumsensor und einen Elektromagnet (Hubmagnet) für die Boosterregelung, welche schematisch durch das Bezugszeichen 80 angedeutet sind. Die elektronische Steuer- und Regeleinheit der Bremsensteuervorrichtung 70 ist zur Ansteuerung des Vakuumbremskraftverstärkers 101 ausgeführt, und daher über entsprechende Leitungen 81 mit diesem, insbesondere mit dem Vakuumsensor und dem Elektromagnet, verbunden.

Die hydraulische Einheit der Bremsensteuervorrichtung 70 umfasst beispielsgemäß vier Radbremskreise mit den zugeordneten vier Eingangsdruckanschlüssen 30, 31, 32, 33 und Ausgangsdruckanschlüssen 40, 41, 42, 43 sowie eine Druckregelventilanordnung 72 zum Einstellen radindividueller Radbremsdrücke. Da die Bremsensteuervorrichtung 70 zur Ansteuerung des elektrisch ansteuerbaren Vakuumbremskraftverstärker 101 zum Aufbau eines Bremsdruckes geeignet ist, umfasst die Bremsensteuervorrichtung 70 vorteilhafterweise keine elektrisch ansteuerbare Druckquelle.

Dem Rad jeder Radbremse 50, 51, 52, 53 sind beispielsgemäß zwei Raddrehzahlsensoren zugeordnet, d.h. Raddrehzahlsensoren WSS1 und WSS1' für das Rad der Radbremse 50, Raddrehzahlsensoren WSS2 und WSS2' für das Rad der Radbremse 51, Raddrehzahlsensoren WSS3 und WSS3' für das Rad der Radbremse 52, Raddrehzahlsensoren WSS4 und WSS4' für das Rad der Radbremse 53. Jeweils das Signal des einen Raddrehzahlsensors WSS1, WSS2, WSS3, WSS4 wird der ersten Bremsensteuervorrichtung 60 über eine Signalleitung 90, 91, 92, 93 zugeführt, das Signal des anderen Raddrehzahlsensors WSS1', WSS2', WSS3', WSS4' wird über eine Signalleitung 94, 95, 96, 97 der zweiten Bremsensteuervorrichtung 70 zugeführt.

Die zusätzlichen zweiten Raddrehzahlsensoren WSS1', WSS2', WSS3', WSS4', welche der zweiten Bremsensteuervorrichtung 70 zugeführt werden, sind für eine Schlupfregelung vorteilhaft, wenn keine anderen Ersatzinformationen zur Verfügung stehen oder ausreichend sind.

Anstelle von zumindest zwei Einrichtungen je Radbremse zur Erfassung der Raddrehzahl kann auch eine redundant ausgeführte Einrichtung zur Erfassung der Raddrehzahl (redundanter Raddrehzahlsensor) vorgesehen sein, welche zwei voneinander unabhängige Raddrehzahlsignale liefert.

Die Bremsanlage erlaubt durch die elektrische Ansteuerbarkeit des Vakuumbremskraftverstärkers 101 durch die zweite Bremsensteuervorrichtung 70 und die Druckregelventilanordnung 72 der zweiten Bremsensteuervorrichtung 70 eine redundante Fremdansteuerung sowie redundante radindividuelle Bremsregelung der Bremsanlage.

Beispielsweise wird eine an sich bekannte Bremsanlage mit Hauptbremszylinder 102 und (erster) elektrohydraulischer Bremsensteuervorrichtung 60 durch eine zusätzliche (zweite) elektrohydraulische Bremsensteuervorrichtung 70 mit elektronischer Steuer- und Regeleinheit (ECU) und hydraulischer Steuer- und Regeleinheit (HCU) erweitert, wobei die Bremsensteuervorrichtung 70 eine funktionale Einheit aus elektrischer Ansteuerung eines aktiven Vakuumbremskraftverstärkers (in der ECU der Bremsensteuervorrichtung 70) und der ersten Bremsensteuervorrichtung 60 nachgeschalteter Druckregelventilanordnung 72 (in der HCU der Bremsensteuervorrichtung 70) mit zugehöriger elektrischer Ansteuerung (in der ECU der Bremsensteuervorrichtung 70) darstellt.

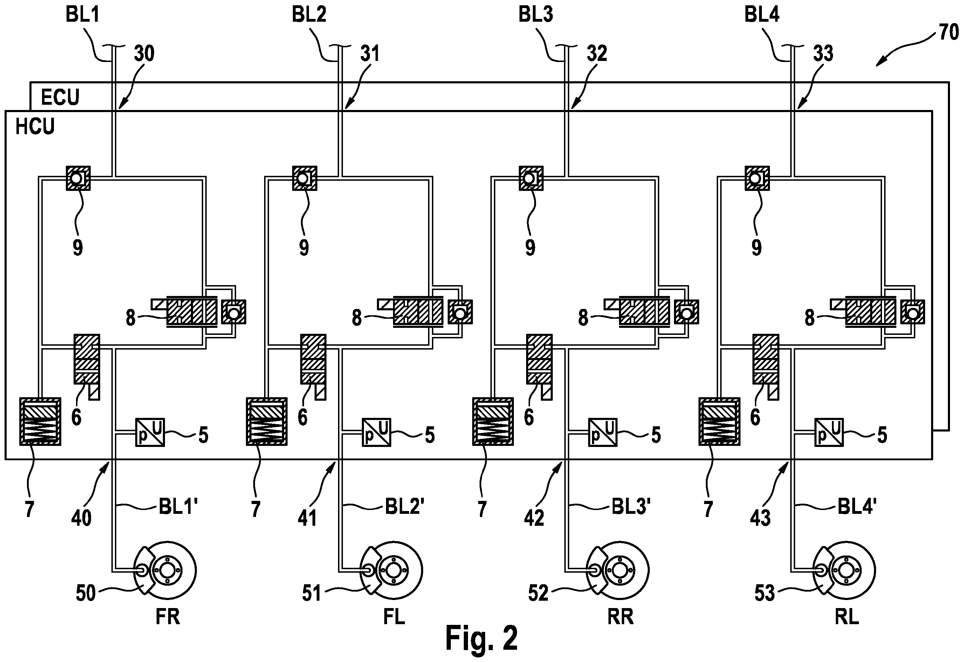

In Fig. 2 ist ein Ausführungsbeispiel einer zweiten elektrohydraulischen Bremsensteuervorrichtung 70 dargestellt. Die Bremsensteuervorrichtung 70 ist einteilig ausgeführt, d.h. als ein Bremsensteuergerät, welches eine elektronische Steuer- und Regeleinheit (ECU) und eine hydraulische Steuer- und Regeleinheit (HCU) umfasst.

Beispielsgemäß ist die Bremsensteuervorrichtung 70 für vier Radbremsen 50, 51, 52, 53 dargestellt, eine Erweiterung auf mehr Radbremsen ist einfach möglich. Beispielsgemäß ist die Radbremse 50 dem rechten Vorderrad (FR), die Radbremse 51 dem linken Vorderrad (FL), die Radbremse 52 dem rechten Hinterrad (RR) und die Radbremse 53 dem linken Hinterrad (RL) zugeordnet. Andere Bremskreisaufteilungen sind möglich.

An die vier, radindividuellen Eingangsdruckanschlüsse 30, 31, 32, 33 der Bremsensteuervorrichtung 70 ist je eine Bremsleitung BL1, BL2, BL3, BL4 angeschlossen, welche je von einem der radindividuellen Ausgangsdruckanschlüsse 20, 21, 22, 23 der nicht dargestellten ersten Bremsensteuervorrichtung 60 kommt. An die vier, radindividuellen Ausgangsdruckanschlüsse 40, 41, 42, 43 der Bremsensteuervorrichtung 70 ist je eine Bremsleitung BL1', BL2', BL3', BL4' angeschlossen, welche zu einer der Radbremsen 50, 51, 52, 53 führt.

Bremsensteuervorrichtung 70 umfasst beispielsgemäß vier (für jede Radbremse einen Druckregelkreis) identische, vollständig getrennte Druckregelkreise mit jeweils einem elektrisch betätigbaren, vorteilhafterweise stromlos offenen, Einlassventil 8, einem elektrisch betätigbaren, vorteilhafterweise stromlos geschlossenen, Auslassventil 6 und einem Niederdruckspeicher 7.

Je Druckregelkreis ist in der Verbindung zwischen jeweiligem Eingangs- und Ausgangsdruckanschluss eine Parallelschaltung von Einlassventil 8 einerseits und Hintereinanderschaltung von in Richtung des Eingangsanschlusses öffnendem Rückschlagventil 9 und Auslassventil 6 andererseits angeordnet.

Beispielgemäß ist dem Einlassventil 8 ein weiteres (nicht näher bezeichnetes), in Richtung des Eingangsanschlusses öffnendes Rückschlagventil parallel geschaltet.

Beispielgemäß sind die Einlassventil 8 analogisiert oder anlog ansteuerbar ausgeführt, um im Falle einer Bremsdruckregelung mittels der Bremsensteuervorrichtung 70 eine möglichst genaue Radbremsdruckregelung zu ermöglichen.

Zum Bremsdruckabbau während einer Antiblockierregelung ist jede Radbremse über das Auslassventil 6 mit dem zugeordneten Niederdruckspeicher 7 verbindbar. Das Volumen, das durch die Auslassventile 6 abgelassen wird, wird in den vorgesehenen Niederdruckspeichern 7 gespeichert. Nach Ende der Bremsregelung können die Niederdruckspeichern 7 sich über die Rückschlagventile 9 wieder selbsttätig entleeren.

Bremsensteuervorrichtung 70 umfasst keine Pumpe.

Weiterhin ist beispielsgemäß ein Drucksensor 5 je Radbremskreis vorgesehen, um den vom Vakuumbremskraftverstärker eingeregelten Druck zu messen.

Optional kann die Bremsensteuervorrichtung 70 mit weniger Drucksensoren ausgestattet sein, wenn auf eine radindividuelle Druckregellung verzichtet werden kann oder eine Druckschätzung ausreicht.

Um in der erfindungsgemäßen Bremsanlage Stabilitätsregelfunktionen redundant durchführen zu können, sind vorteilhafterweise auch die für die Regelfunktion notwendigen Sensorsignale, insbesondere das Gierratensignal, redundant verfügbar. So sind in dem Ausführungsbeispiel der Fig. 1 beispielsgemäß zumindest zwei Gierratensensoren 15, 16 bzw. zwei Sensorcluster mit zumindest einem Gierratensensor vorgesehen, wobei der eine Gierratensensor / Sensorcluster 15 mit der elektronischen Steuer- und Regeleinheit der ersten Bremsensteuervorrichtung 60 und der andere Gierratensensor / Sensorcluster 16 mit der elektronischen Steuer- und Regeleinheit der zweiten Bremsensteuervorrichtung 70 verbunden ist.

Alternativ kann ein doppelt ausgeführter Gierratensensor oder Sensorcluster vorgesehen sein, der zwei unabhängige Signale bereitstellt. Das eine Signal wird der ersten Bremsensteuervorrichtung und das andere Signal der zweiten Bremsensteuervorrichtung zugeführt.

In einer ersten Betriebsart der Bremsanlage zur Fahrdynamikregelung (erster remote control Modus), z.B. in einem fehlerfreien Zustand der Bremsanlage, wird mittels der elektrisch betätigbaren Druckquelle 63 (z.B. mittels des Motor-Pumpen-Aggregats) der ersten Bremsensteuervorrichtung 60 ein Bremsdruck aktiv aufgebaut und mittels der Druckregelventilanordnung 62 der ersten Bremsensteuervorrichtung 60 radindividuelle Radbremsdrücke eingestellt. Druckquelle 63 und Druckregelventilanordnung 62 der ersten Bremsensteuervorrichtung 60 werden von der elektronischen Steuer- und Regeleinheit der ersten Bremsensteuervorrichtung 60 angesteuert. Die zweite Bremsensteuervorrichtung 70 leitet die radindividuellen Bremsdrücke lediglich weiter/durch, z.B. über stromlos offene Einlassventile 8.

In einer zweiten Betriebsart der Bremsanlage zur Fahrdynamikregelung (zweiter remote control Modus), z.B. bei einem Fehler in der ersten Bremsensteuervorrichtung 60, wird mittels der elektronischen Steuer- und Regeleinheit der zweiten Bremsensteuervorrichtung 70 der Bremskraftverstärker zum aktiven Aufbau eines Bremsdrucks in dem Hauptbremszylinder angesteuert. Die erste Bremsensteuervorrichtung 60 leitet die radindividuellen Bremsdrücke lediglich weiter/durch, z.B. über stromlos offene Einlassventile. Die Einstellung radindividueller Radbremsdrücke wird mittels der Druckregelventilanordnung 72 der zweiten Bremsensteuervorrichtung 70 durchgeführt, welche ebenso durch die zweite elektronische Steuer- und Regeleinheit der zweiten Bremsensteuervorrichtung 70 angesteuert wird.

Die Bremsanlage umfasst weiterhin vorteilhafterweise eine dritte elektronische Steuer- und Regeleinheit oder ist mit einer dritten elektronischen Steuer- und Regeleinheit verbunden (nicht dargestellt). Diese dient z.B. zur Steuerung weiteren Fahrzeugfunktionen, insbesondere der Funktionen zum hochautomatisierten oder autonomen Fahren (HAF). Die dritte Steuer- und Regeleinheit gibt beispielsgemäß eine Bremsanforderung, im Sinne einer remote control Vorgabe, an die Bremsanlage vor, welche an die Bremsensteuervorrichtungen 60, 70 weitergeleitet wird. Hierzu sind die Bremsensteuervorrichtung 60 über eine erste Datenverbindung, z.B. einen ersten Datenbus, und die Bremsensteuervorrichtung 70 über eine zweite Datenverbindung, z.B. einen zweiten Datenbus, mit der dritten Steuer- und Regeleinheit verbunden. Die dritte Steuer- und Regeleinheit ist z.B. ein Fahrzeug-Controller oder ein HAF-Controller.

Durch die Erfindung wird eine redundante Bremsanlage bereitgestellt, welche nach einem beliebigen Fehler einer Komponente weiterhin fremdansteuerbar ist. Weiterhin kann die Bremsanlage, wenn von Fahrzeugseite die Anforderung gegeben wird, auch die Stabilitätsregelfunktionen (ESP) ausführen.

## Patentansprüche

1. Bremsanlage für Fahrzeuge, insbesondere Kraftfahrzeuge, mit einem Hauptbremszylinder (102), insbesondere Tandemhauptbremszylinder, einem dem Hauptbremszylinder vorgeschalteten Bremskraftverstärker (101), insbesondere zumindest vier, hydraulisch betätigbaren Radbremsen (50, 51, 52, 53) und einer ersten elektrohydraulischen Bremsensteuervorrichtung (60), welche eine erste Druckregelventilanordnung (62) zum Einstellen radindividueller Bremsdrücke, und insbesondere eine elektrisch ansteuerbare Druckquelle (63), sowie für jede Radbremse einen radindividuellen Ausgangsdruckanschluss (20, 21, 22, 23) umfasst, **dadurch gekennzeichnet, dass** der Bremskraftverstärker (101) elektrisch ansteuerbar ausgeführt und eine zweite elektrohydraulische Bremsensteuervorrichtung (70) vorgesehen ist, welche eine zweite Druckregelventilanordnung (72, 6, 8), insbesondere zum Einstellen radindividueller Bremsdrücke, umfasst, und welche in Reihe zwischen die erste Bremsensteuervorrichtung (60) und die Radbremsen (50, 51, 52, 53) geschaltet ist.

2. Bremsanlage nach Anspruch 1, **dadurch gekennzeichnet, dass** die zweite Bremsensteuervorrichtung (70) keine, insbesondere elektrisch ansteuerbare, Druckquelle umfasst.

3. Bremsanlage nach Anspruch 1 oder 2, **dadurch gekennzeichnet, dass** der elektrisch ansteuerbare Bremskraftverstärker ein durch einen Hubmagneten (80) betätigbarer aktiver Vakuumbremskraftverstärker ist.

4. Bremsanlage nach einem der Ansprüche 1 bis 3, **dadurch gekennzeichnet, dass** die zweite Bremsensteuervorrichtung (70) zur Ansteuerung des elektrisch betätigbaren Bremskraftverstärkers ausgeführt ist, insbesondere dass Mittel (81) zur Ansteuerung des Bremskraftverstärkers durch die zweite Bremsensteuervorrichtung (70) vorgesehen sind.

5. Bremsanlage nach einem der Ansprüche 1 bis 4, **dadurch gekennzeichnet, dass** die erste Bremsensteuervorrichtung (60) zumindest einen Eingangsdruckanschluss (25, 26) aufweist, an welchen der Hauptbremszylinder (102) angeschlossen ist.

6. Bremsanlage nach einem der Ansprüche 1 bis 5, **dadurch gekennzeichnet, dass** die zweite Bremsensteuervorrichtung (70) für jede Radbremse (50, 51, 52, 53) einen radindividuellen Eingangsdruckanschluss (30, 31, 32, 33) umfasst.

7. Bremsanlage nach einem der Ansprüche 1 bis 6, **dadurch gekennzeichnet, dass** jeder Ausgangsdruckanschluss (20, 21, 22, 23) der ersten Bremsensteuervorrichtung (60) an einen Eingangsdruckanschluss (30, 31, 32, 33) der zweiten Bremsensteuervorrichtung angeschlossen ist.

8. Bremsanlage nach einem der Ansprüche 1 bis 7, **dadurch gekennzeichnet, dass** die zweite Bremsensteuervorrichtung (70) für jede Radbremse einen radindividuellen Ausgangsdruckanschluss (40, 41, 42, 43) umfasst, welcher mit, insbesondere genau, einer Radbremse (50, 51, 52, 53) verbunden ist.

9. Bremsanlage nach einem der Ansprüche 1 bis 8, **dadurch gekennzeichnet, dass** die zweite Bremsensteuervorrichtung (70) für jede Radbremse ein elektrisch betätigbares, insbesondere analog ansteuerbares oder analogisiert ausgeführtes, Einlassventil (8), ein elektrisch betätigbares Auslassventil (6) und einen Niederdruckspeicher (7), und insbesondere einen Drucksensor (5), umfasst.

10. Bremsanlage nach einem der Ansprüche 1 bis 9, **dadurch gekennzeichnet, dass** die erste Bremsensteuervorrichtung (60) einteilig als ein Bremsensteuergerät mit einer elektronischen Steuer- und Regeleinheit (ECU) und einer hydraulischen Steuer- und Regeleinheit (HCU) ausgeführt ist.

11. Bremsanlage nach einem der Ansprüche 1 bis 10, **dadurch gekennzeichnet, dass** die zweite Bremsensteuervorrichtung (70) einteilig als ein Bremsensteuergerät mit einer elektronischen Steuer- und Regeleinheit (ECU) und einer hydraulischen Steuer- und Regeleinheit (HCU) ausgeführt ist.

12. Bremsanlage nach einem der Ansprüche 1 bis 11, **dadurch gekennzeichnet, dass** für jedes der mit einer Radbremse (50, 51, 52, 53) versehenen Räder
• zumindest zwei Einrichtungen (WSS1, WSS1'; WSS2, WSS2'; WSS3, WSS3'; WSS4, WSS4') zur Erfassung einer Raddrehzahl vorgesehen sind, wobei jeweils das Signal einer der Einrichtungen (WSS1; WSS2; WSS3; WSS4) der ersten Bremsensteuervorrichtung (60) und das Signal der andere Einrichtung (WSS1'; WSS2'; WSS3'; WSS4') der zweiten Bremsensteuervorrichtung (70) zugeführt wird, oder
• zumindest eine redundant ausgeführte Einrichtung zur Erfassung einer Raddrehzahl vorgesehen ist, wobei jeweils ein Signal der Einrichtung der ersten Bremsensteuervorrichtung (60) und das andere Signal der zweiten Bremsensteuervorrichtung (70) zugeführt wird.

## Claims

1. Brake system for vehicles, in particular motor vehicles, having a main brake cylinder (102), in particular a tandem main brake cylinder, a brake booster (101) which is arranged upstream of the main brake cylinder, in particular at least four hydraulically actuatable wheel brakes (50, 51, 52, 53) and a first electrohydraulic brake control device (60) which comprises a first pressure control valve arrangement (62) for adjusting wheel-specific brake pressures, and in particular an electrically controllable pressure source (63), and for each wheel brake a wheel-specific output pressure connection (20, 21, 22, 23), **characterized in that** the brake booster (101) is constructed so as to be able to be electrically controlled and there is provided a second electrohydraulic brake control device (70) which comprises a second pressure control valve arrangement (72, 6, 8), in particular for adjusting wheel-specific brake pressures and which is connected in series between the first brake control device (60) and the wheel brakes (50, 51, 52, 53).

2. Brake system according to Claim 1, **characterized in that** the second brake control device (70) does not comprise any, in particular electrically controllable, pressure source.

3. Brake system according to Claim 1 or Claim 2, **characterized in that** the electrically controllable brake booster is an active vacuum brake booster which can be actuated by means of a lifting magnet (80).

4. Brake system according to one of Claims 1 to 3, **characterized in that** the second brake control device (70) is constructed to control the electrically actuatable brake booster, in particular **in that** means (81) for controlling the brake booster by means of the second brake control device (70) are provided.

5. Brake system according to one of Claims 1 to 4, **characterized in that** the first brake control device (60) has at least one input pressure connection (25, 26) to which the main brake cylinder (102) is connected.

6. Brake system according to one of Claims 1 to 5, **characterized in that** the second brake control device (70) comprises for each wheel brake (50, 51, 52, 53) a wheel-specific input pressure connection (30, 31, 32, 33).

7. Brake system according to one of Claims 1 to 6, **characterized in that** each output pressure connection (20, 21, 22, 23) of the first brake control device (60) is connected to an input pressure connection (30, 31, 32, 33) of the second brake control device.

8. Brake system according to one of Claims 1 to 7, **characterized in that** the second brake control device (70) comprises for each wheel brake a wheel-specific output pressure connection (40, 41, 42, 43) which is connected to a, in particular precisely to one, wheel brake (50, 51, 52, 53).

9. Brake system according to one of Claims 1 to 8, **characterized in that** the second brake control device (70) comprises for each wheel brake an electrically actuatable input valve (8) which can in particular be controlled in an analog manner or which is constructed so as to be analogized, an electrically actuatable output valve (6) and a low-pressure store (7), and in particular a pressure sensor (5).

10. Brake system according to one of Claims 1 to 9, **characterized in that** the first brake control device (60) is constructed integrally as a brake control device having an electronic control and regulation unit (ECU) and a hydraulic control and regulation unit (HCU).

11. Brake system according to one of Claims 1 to 10, **characterized in that** the second brake control device (70) is constructed integrally as a brake control device having an electronic control and regulation unit (ECU) and a hydraulic control and regulation unit (HCU).

12. Brake system according to one of Claims 1 to 11, **characterized in that** for each of the wheels which are provided with a wheel brake (50, 51, 52, 53)
• at least two devices (WSS1, WSS1'; WSS2, WSS2'; WSS3, WSS3'; WSS4, WSS4') are provided for detecting a wheel speed, wherein the signal of one of the devices (WSS1; WSS2; WSS3; WSS4) is supplied to the first brake control device (60) and the signal of the other device (WSS1'; WSS2'; WSS3'; WSS4') is supplied to the second brake control device (70) or
• at least one redundant device for detecting a wheel speed is provided, wherein in each case one signal of the device is supplied to the first brake control device (60) and the other signal is supplied to the second brake control device (70).

## Revendications

1. Système de frein pour véhicules, notamment véhicules automobiles, comprenant un maître-cylindre de frein (102), notamment un maître-cylindre de frein en tandem, un servofrein (101) branché en amont du maître-cylindre de frein, notamment au moins quatre freins de roue (50, 51, 52, 53) pouvant être actionnés hydrauliquement et un premier dispositif de commande de frein (60) électrohydraulique, lequel comprend un premier arrangement de vannes de régulation de pression (62) destiné à régler les pressions de freinage individuelles aux roues, et notamment une source de pression (63) pouvant être pilotée électriquement, ainsi qu'un raccord de pression de sortie (20, 21, 22, 23) individuel à la roue pour chaque frein de roue, **caractérisé en ce que** le servofrein (101) est réalisé pour pouvoir être piloté électriquement et il existe un deuxième dispositif de commande de frein (70) électrohydraulique, lequel comprend un deuxième arrangement de vannes de régulation de pression (72, 6, 8), notamment destiné à régler les pressions de freinage individuelles aux roues, et qui est branché en série entre le premier dispositif de commande de frein (60) et les freins de roue (50, 51, 52, 53).

2. Système de frein selon la revendication 1, **caractérisé en ce que** le deuxième dispositif de commande de frein (70) ne comprend aucune source de pression, notamment qui peut être pilotée électriquement.

3. Système de frein selon la revendication 1 ou 2, **caractérisé en ce que** le servofrein qui peut être piloté électriquement est un servofrein à vide actif pouvant être actionné par un électroaimant (80).

4. Système de frein selon l'une des revendications 1 à 3, **caractérisé en ce que** le deuxième dispositif de commande de frein (70) est réalisé pour piloter le servofrein qui peut être actionné électriquement, notamment **en ce qu'**il existe des moyens (81) destinés au pilotage du servofrein par le deuxième dispositif de commande de frein (70).

5. Système de frein selon l'une des revendications 1 à 4, **caractérisé en ce que** le premier dispositif de commande de frein (60) possède au moins un raccord de pression d'entrée (25, 26) auquel est raccordé le maître-cylindre de frein (102).

6. Système de frein selon l'une des revendications 1 à 5, **caractérisé en ce que** le deuxième dispositif de commande de frein (70) comprend un raccord de pression d'entrée (30, 31, 32, 33) individuel à la roue pour chaque frein de roue (50, 51, 52, 53).

7. Système de frein selon l'une des revendications 1 à 6, **caractérisé en ce que** chaque raccord de pression de sortie (20, 21, 22, 23) du premier dispositif de commande de frein (60) est raccordé à un raccord de pression d'entrée (30, 31, 32, 33) du deuxième dispositif de commande de frein.

8. Système de frein selon l'une des revendications 1 à 7, **caractérisé en ce que** le deuxième dispositif de commande de frein (70) comprend un raccord de pression de sortie (40, 41, 42, 43) individuel à la roue pour chaque frein de roue, lequel est relié à, notamment exactement, un frein de roue (50, 51, 52, 53).

9. Système de frein selon l'une des revendications 1 à 8, **caractérisé en ce que** le deuxième dispositif de commande de frein (70) comprend pour chaque frein de roue une vanne d'entrée (8) pouvant être actionnée électriquement, pouvant notamment être pilotée de manière analogique ou réalisée sous forme analogique, une vanne de sortie (6) pouvant être actionnée électriquement et un accumulateur à basse pression (7) et notamment un capteur de pression (5).

10. Système de frein selon l'une des revendications 1 à 9, **caractérisé en ce que** le premier dispositif de commande de frein (60) est réalisé d'un seul tenant sous la forme d'un contrôleur de freinage avec une unité de commande et de régulation électronique (ECU) et une unité de commande et de régulation hydraulique (HCU).

11. Système de frein selon l'une des revendications 1 à 10, **caractérisé en ce que** le deuxième dispositif de commande de frein (70) est réalisé d'un seul tenant sous la forme d'un contrôleur de freinage avec une unité de commande et de régulation électronique (ECU) et une unité de commande et de régulation hydraulique (HCU).

12. Système de frein selon l'une des revendications 1 à 11, **caractérisé en ce que** pour chacune des roues pourvues d'un frein de roue (50, 51, 52, 53)
* il existe au moins deux appareils (WSS1, WSS1' ; WSS2, WSS2' ; WSS3, WSS3' ; WSS4, WSS4') servant à acquérir une vitesse de rotation de roue, le signal de l'un des appareils (WSS1 ; WSS2 ; WSS3 ; WSS4) étant respectivement acheminé au premier dispositif de commande de frein (60) et le signal de l'autre appareil (WSS1' ; WSS2' ; WSS3' ; WSS4') au deuxième dispositif de commande de frein (70), ou
* il existe au moins un appareil réalisé redondant servant à acquérir une vitesse de rotation de roue, un signal de l'appareil étant respectivement acheminé au premier dispositif de commande de frein (60) et l'autre signal au deuxième dispositif de commande de frein (70).
